# FASCICULE DE BREVET EUROPEEN

(11) **EP 0 983 553 B1**
(45) Date de publication et mention de la délivrance du brevet: **11.10.2017**
(21) Numéro de dépôt: 99907709.2
(22) Date de dépôt: 15.03.1999
(51) Int. Cl.: G06F 13/12, G06F 3/06, G06F 11/20

(54) **SOUS-SYSTEME DE DISQUES A MULTIPLES INTERFACES CONFIGURABLES**
SPEICHERPLATTENUNTERSYSTEM MIT KOFIGURIERBAREN MEHRFACHSCHNITTSTELLEN
DISK SUBSYSTEM WITH MULTIPLE CONFIGURABLE INTERFACES

(30) Priorité: 18.03.1998 FR 9803316
(43) Date de publication de la demande: 08.03.2000
(73) Titulaire: Bull SAS, 78340 Les Clayes-sous-Bois (FR)
(72) Inventeur: CARGEMEL, Laurent, 49240 Avrille (FR); CARTEAU, Daniel, 78180 Montigny le Bretonneux (FR); DELEPOULLE, Jacques, 78640 Saint-Germain de la Grange (FR)
(74) Mandataire: Fragnaud, Aude
(86) Numéro de dépôt international: PCT/FR1999/000573
(87) Numéro de publication internationale: WO 1999/048014

(56) Documents cités:
- EP-A- 0 287 301
- EP-A- 0 570 168
- WO-A-92/18934
- DE-A- 3 204 160
- US-A- 5 603 039
- US-A- 5 628 637
- "Small Computer System Interface ID Translation" IBM TECHNICAL DISCLOSURE BULLETIN, vol. 37, no. 2b, février 1994, page 125 XP000433784 armonk, ny, usa

## Description

La présente invention concerne un sous-système de disques à multiples interfaces configurables utilisé comme mémoire de masse pour système informatique.

Les applications de type mémoire de masse pour ordinateur demandent un stockage de plus en plus important et une sécurisation des données stockées (pas de perte de données suite à une panne). A ceci vient s'ajouter un souci de disponibilité, l'utilisateur étant à la recherche de systèmes très fiables capables de fonctionner en permanence, même si une maintenance des systèmes est nécessaire.

Les sous-systèmes proposés actuellement sont de deux types : les sous- systèmes JBOD (Just a Bunch Of Disks) ou RAID (Redundant Array of Inexpensive Disks). Les sous-systèmes JBOD (ou attachement direct de disques) sont les plus simples et les moins coûteux. Ils ne nécessitent qu'une carte adaptatrice à interface de système de petit ordinateur (SCSI : Small Computer System Interface) pour connecter jusqu'à 4 tiroirs de 6 disques aux systèmes hôtes. Il est possible, grâce au système d'exploitation (operating system, de réaliser des duplications (mirroring) d'un disque sur l'autre et donc, de sécuriser les données pour se protéger contre une défaillance d'un disque.

L'inconvénient de ces systèmes est que les configurations sont fixes (2 interfaces SCSI de 12 disques maximum) et donc ne couvrent pas tous les besoins des utilisateurs. Ces systèmes offrent certes une bonne sécurisation des données, grâce à la duplication, mais en cas de défectuosité, par exemple d'un élément de la carte adaptatrice, le sous-système n'est plus opérationnel.

Les systèmes RAID peuvent comporter deux contrôleurs dont l'un permet, en cas de défaillance de l'autre, de garantir le fonctionnement correct du sous-système de mémoire de masse, par exemple, en mettant en liaison un premier contrôleur avec l'hôte et le deuxième contrôleur avec le même hôte, mais en utilisant des connexions différentes.

Les sous-systèmes RAID présentent des coûts élevés dus aux coûts des contrôleurs et de la mémoire cache nécessaire ainsi que, dans certains cas, des performances décevantes par rapport à des disques utilisés de manière conventionnelle. En outre le nombre de configurations est limité. Le document EP0570168 (IBM CORPORATION - 18 novembre 1993) décrit un adaptateur pour interconnecter des dispositifs de mémoire à disque à un ordinateur hôte. La présente invention a pour objet de pallier les inconvénients de l'art antérieur en proposant un sous-système JBOD à très haute disponibilité, hautes performances, permettant une sécurisation d'un grand volume de données, et un grand choix de configurations d'utilisation possibles.

Ce but est atteint par le fait que le sous-système de disques à multiples interfaces configurables est caractérisé en ce qu'il comprend au moins une carte adaptatrice d'interface, au moins un tiroir, comprenant chacun une pluralité de disques, chaque tiroir étant relié à une carte adaptatrice par des interfaces de disque SCSI, une première carte adaptatrice comprenant, un interrupteur pour modifier le système d'adressage des disques d'au moins un tiroir, la ou les cartes adaptatrices comprenant chacune deux convertisseurs d'interface à extrémité simple/extrémité différentielle SE/DE indépendants, chaque convertisseur SE/DE étant d'une part relié à un tiroir, et d'autre part alimenté indifféremment par l'un des deux convertisseurs courant continu/continu DC/DC de la carte adaptatrice et deux connecteurs SCSI externes étant reliés à chaque convertisseur SE/DE.

Selon une autre particularité, l'interrupteur est un interrupteur matériel, de type interrupteur Dual in Line ou un interrupteur de type logiciel.

Selon une autre particularité, l'interrupteur ajoute une valeur constante aux adresses des disques de deux tiroirs, cette valeur étant préférentiellement égale à 8.

Selon une autre particularité, les interfaces SCSI qui relient les tiroirs de disques à la carte contrôleur sont de type extrémité simple (Single Ended) SE.

Selon une autre particularité, les interfaces SCSI qui relient la carte adaptatrice aux systèmes hôtes sont de type à extrémité différentielle DE (Differential Ended).

Selon une autre particularité, chaque convertisseur SE/DE est relié par une connexion en V à deux connecteurs accessibles à l'extérieur du sous-système pour connecter ,soit des terminateurs de ligne, soit des adaptateurs de bus d'une machine hôte.

Selon une autre particularité, chacun des convertisseurs de courant continu/continu DC/DC des blocs de convertisseurs SE/DE distribue une tension aux deux convertisseurs SE/DE des blocs correspondant par l'intermédiaire d'un "ou câblé".

Selon une autre particularité, la carte adaptatrice comprend une carte fille , cette carte fille permettant, dans une première position, de connecter la carte adaptatrice à deux tiroirs déterminés de disques, et dans une deuxième position, de connecter la carte adaptatrice à deux tiroirs différents de disques de ceux de la première position.

Selon une autre particularité, une liaison relie deux connecteurs de deux convertisseurs SE/DE, réalisant ainsi un chaînage de deux tiroirs de disques.

Selon une autre particularité, les interfaces de disques SCSI reliant les tiroirs de disques et/ou les interfaces de disques SCSI reliant la ou les cartes adaptatrices aux systèmes hôtes sont de type Ultra/Wide et supportent donc un débit maximum de 40 Mégaoctets/s.

Selon une autre particularité, les terminateurs de lignes qui ne sont pas situés dans les tiroirs de disques, sont incorporés à chaque carte fille de chaque carte adaptatrice associée.

D'autres caractéristiques et avantages de la présente invention apparaîtront dans la description des figures dans lesquelles :
- la figure 1 représente un schéma synoptique du sous-système selon l'invention,
- les figures 2A à 2F représentent un schéma synoptique simplifié d'exemples non limitatifs de configurations possibles du sous-système selon l'invention dans une variante compatible JBOD (Just Bunch Of Disks),
- la figure 3 représente un schéma du chaînage entre les disques dans un tiroir.

Avant de décrire en détail l'invention, il s'avère nécessaire de faire un certain nombre de rappels pour mieux comprendre la description ci-après.

Le sous-système JBOD est un attachement direct de disques. Ce sous-système est connecté à un système hôte et, grâce à un système d'exploitation (operating system), il est possible de faire des duplications (miroir) de disques dans un même sous-système. Le système JBOD n'a pas de fonctionnalité en lui-même, si ce n'est qu'il est étudié afin d'apporter une fiabilité et une haute disponibilité maximale.

Les interfaces SCSI sont constituées de lignes dont chaque extrémité s'achève par un terminateur de ligne. Une interface SCSI Wide est définie par, un bus de données comprenant 8 bits de données et un bit de parité, un bus de données ou commande/réponse comprenant 8 bits et un bit de parité, et 9 autres signaux. Il est possible de connecter jusqu'à 16 objets maximum, qui peuvent être soit des disques, soit des systèmes hôtes. Les interfaces SCSI sont de différents types:
- Narrow SCSI d'un débit de 5 Mégaoctets/seconde (MB/s)
- Fast SCSI d'un débit de 10 Mégaoctets/s
- Fast/Wide SCSI d'un débit de 20 Mégaoctets
- Ultra/Wide SCSI d'un débit de 40 Mégaoctets/s.

Les interfaces SCSI de type Narrow et Fast sont de type 8 bits, l'utilisateur pouvant les connecter à 8 objets maximum. Les interfaces SCSI Fast/Wide et Ultra/Wide sont de type 16 bits, l'utilisateur pouvant les connecter à 16 objets maximum. Il existe deux races d'interfaces SCSI, les extrémités simples SE (Single Ended) qui ont une longueur de ligne limitée entre 3 et 6 mètres, et les extrémités différentielles DE (Differential Ended) qui permettent une longueur de ligne jusqu'à 25 mètres. Les premières SE utilisent la technique du collecteur ouvert, et le signal est transmis sur une seule liaison, le retour s'effectuant par la masse. Les deuxièmes DE nécessitent deux fils qui transportent chacun une information opposée (technique du différentiel).

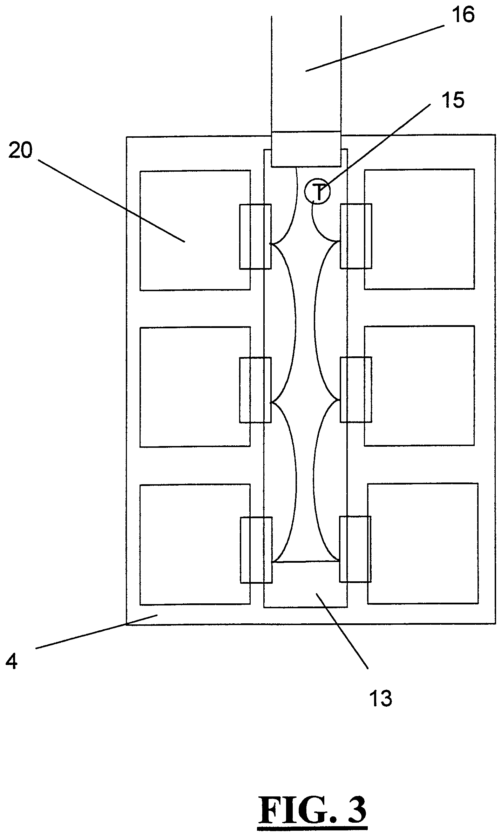

La figure 3 représente un schéma du chaînage entre les disques dans un tiroir. Une interface SCSI Fast/Wide ou Ultra/Wide peut recevoir 16 objets, le but du chaînage étant de créer le moins de dérivations possibles, car celles-ci perturbent les signaux. Le nombre d'objets est limité par le nombre d'adresses qui lui est fixe. En limitant le nombre de connexions sur l'interface SCSI, les bruits et perturbations sur cette interface sont diminués. Un tiroir de disques (4) peut contenir, par exemple jusqu'à 6 disques (20). L'interface SCSI SE des disques (20) est chaînée sur une carte de circuit imprimé (13). L'arrivée d'interface SCSI se fait par un câble plat (16) connecté par chaînage aux 6 disques (20, fig.3) et se terminant par des terminaisons de lignes (15). Si un ou plusieurs disques (20) sont absents ou déconnectés, l'interface SCSI n'est pas coupée et le système peut continuer à fonctionner.

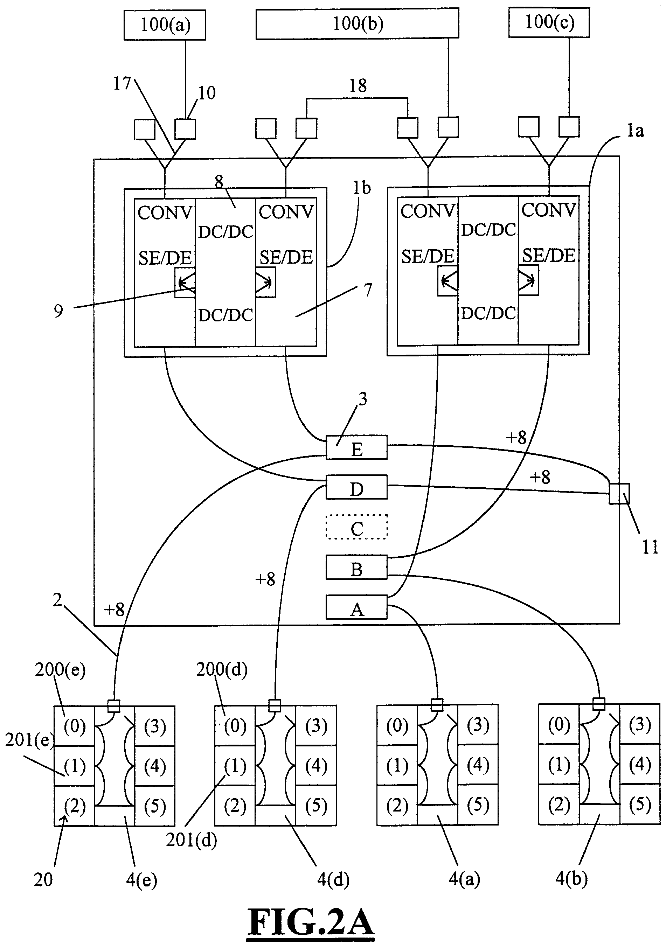

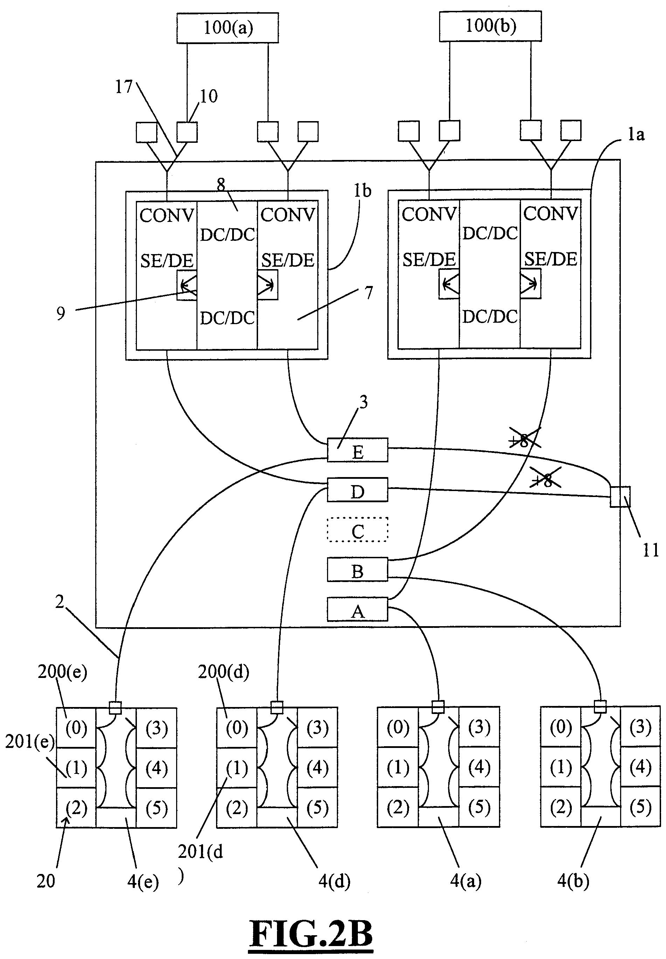

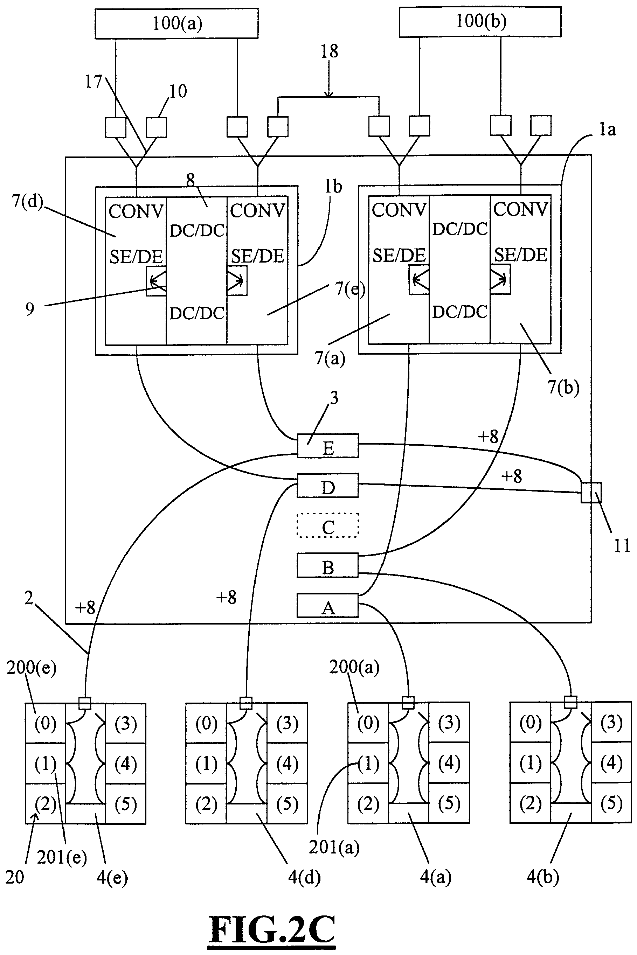

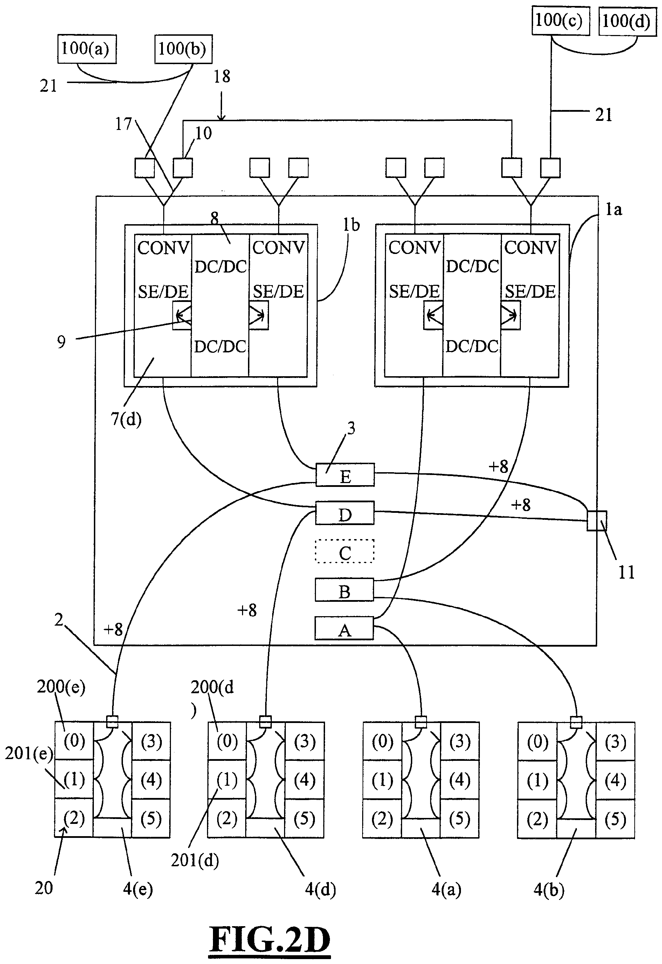

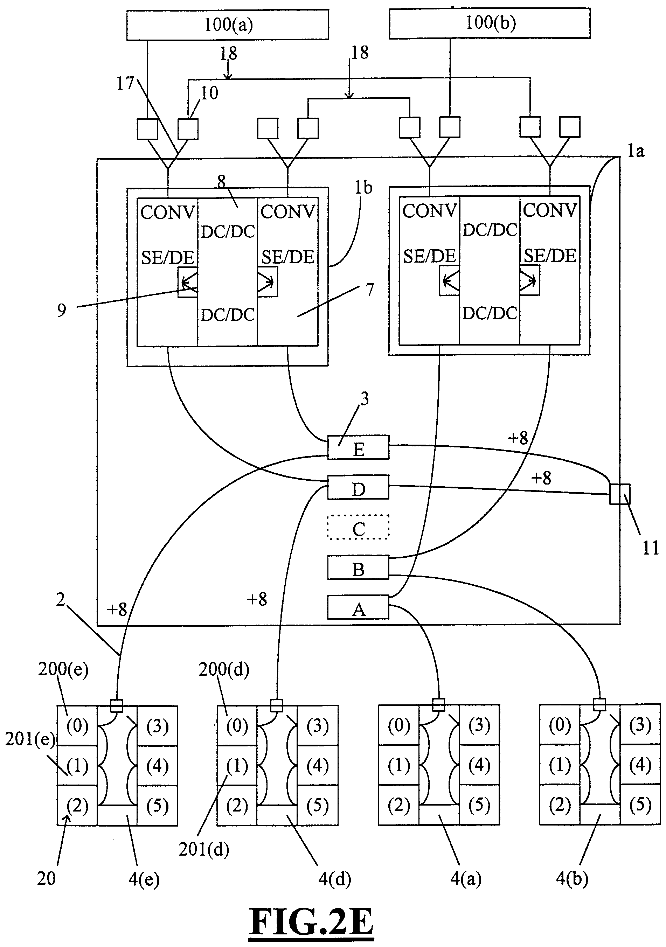

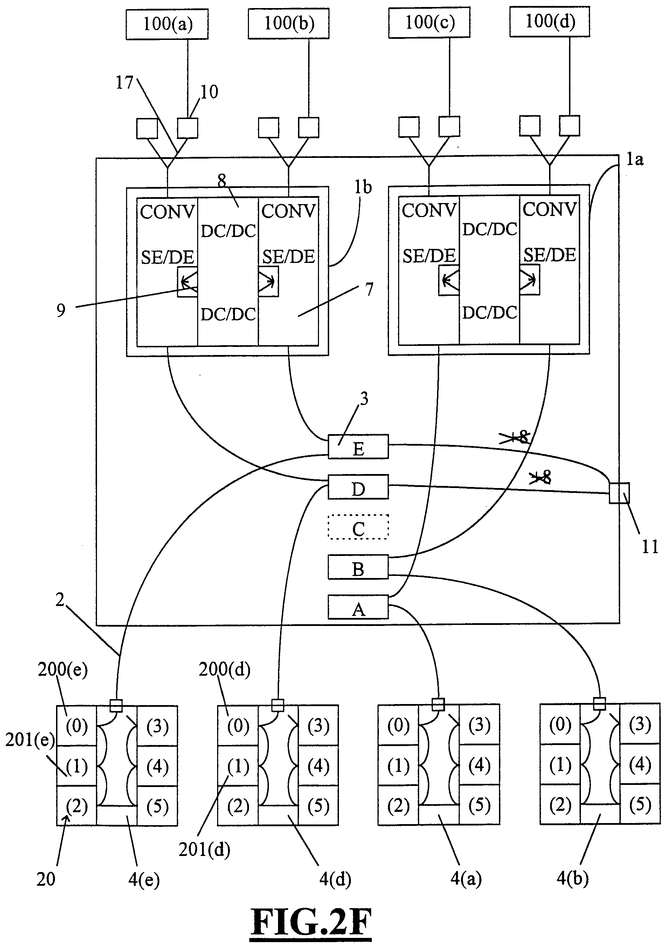

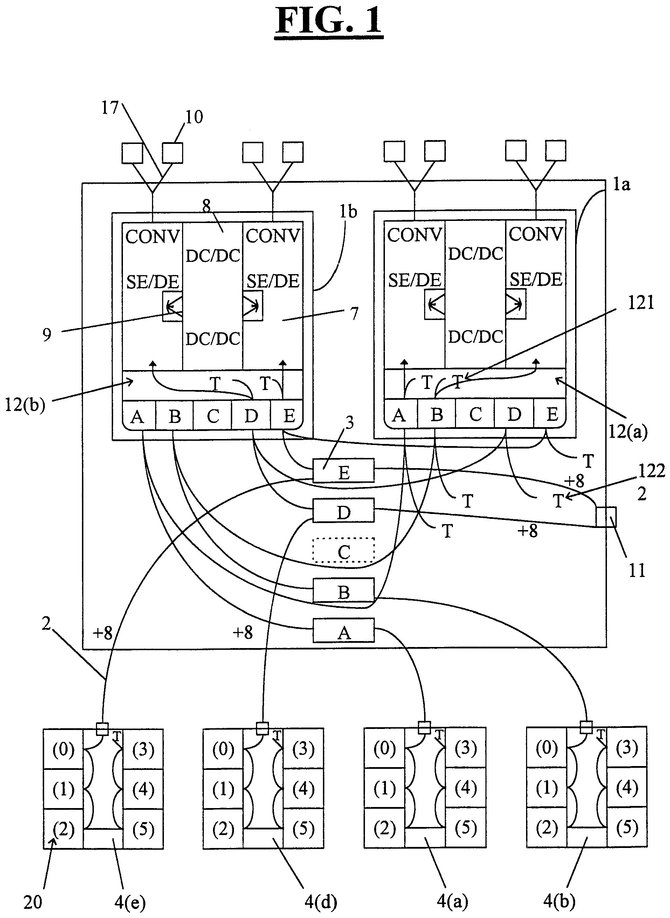

La figure 1 représente un schéma synoptique du sous-système selon l'invention. Sur la figure 1 sont représentées deux cartes (1a, 1b) adaptatrices identiques et quatre tiroirs (4) pouvant contenir, par exemple, jusqu'à six disques (20) chacun. Cet exemple de configuration n'est donné qu'à titre illustratif, et ne constitue pas une limitation de l'invention à cette configuration. En effet, il est possible d'envisager une configuration du sous système selon l'invention comportant un nombre différent de cartes (1) adaptatrices, de tiroirs et de disques. Pour chaque tiroir (4), les adresses des disques (20) sont numérotées, par exemple, de 0 à 5. Les tiroirs (4) sont connectés à une carte adaptatrice (1) par des interfaces SCSI (2) SE Single Ended, par exemple de type Ultra/Wide. Chaque carte (1a, 1b) adaptatrice se connecte à au plus deux connecteurs (3) de tiroir (4) de disques (20), grâce à une carte fille (12a, 12b) située sur chaque carte (1a, 1b) adaptatrice. Le système de cartes filles (12a, 12b) permet de définir deux ensembles de cartes (1a, 1b) adaptatrices identiques. Chaque carte fille (12a, 12b) possède deux positions sur sa carte (1a, 1b) adaptatrice associée. Dans une première position, la carte fille (12a ou 12b) permet à la carte (1a ou 1b) associée de se connecter à deux connecteurs (3, A et B) en liaison avec deux tiroirs (4(a), 4(b)). Dans une deuxième position, la carte fille (12a ou 12b) permet à la carte (1a ou 1b) associée de se connecter à deux autres connecteurs (3, D et E) en liaison avec deux autres tiroirs (4(d), 4(e)). Lorsque le sous-système selon l'invention comprend deux cartes (1a, 1 b) adaptatrices, comme représenté figure 2, les positions de chaque carte (12a, 12b) fille sur chaque carte (1a, 1b) adaptatrice associée doivent être différentes, afin d'éviter qu'un même tiroir (4) soit connecté aux deux cartes (1a, 1b) adaptatrices. Un dispositif (non représenté) automatique, par exemple à affichage LED, prévient l'utilisateur en cas de mauvais montage des cartes (12a, 12b) filles sur les cartes (1a, 1b) adaptatrices associées, par exemple en cas de mauvaise connexion, d'oubli de montage des cartes (12a, 12b) filles ou de mauvais positionnement sur la carte (1a ou 1b) adaptatrice associée. Avantageusement, les terminateurs de lignes des cartes (1a, 1b) adaptatrices sont, soient incorporés aux cartes (12a, 12b) filles, soient situés à l'extérieur des cartes (1a, 1b) adaptatrices. Dans une variante de réalisation où les terminateurs (121) sont incorporés aux cartes (12a, 12b) filles, les terminateurs (122) situés à l'extérieur des cartes (1a, 1b) adaptatrices sont supprimés. Dans une variante de réalisation où les terminateurs (122) sont situés à l'extérieur des cartes (1a, 1b) adaptatrices les terminateurs (121) incorporés aux cartes (12a, 12b) filles sont supprimés. Dans l'exemple représenté figure 1, une première carte (12a) fille est montée dans la première position sur sa carte (1a) adaptatrice associée, et une deuxième carte (12b) fille est montée dans la deuxième position sur sa carte (1b) adaptatrice associée. Chaque carte (1a, 1b) adaptatrice comprend également deux convertisseurs (7) SE/DE, connectés à la carte (12a ou 12b) fille associée. Les convertisseurs (7) de chaque carte (1) adaptatrice sont indépendants, et ont leur propre horloge. Il n'y a donc pas de propagation de panne possible d'un convertisseur SE/DE à l'autre. Les blocs de convertisseurs (7) SE/DE sont alimentés par deux convertisseurs (8) de courant continu/continu DC/DC transformant la tension continue d'alimentation générale du sous-système qui est de l'ordre de 24 Volts en une tension spécifique et stabilisée pour chaque convertisseur SE/DE (7) de 5 Volts. Mais chacun des deux convertisseurs de courant DC/DC (8) distribue le courant aux deux convertisseurs SE/DE (7) d'un même bloc par l'intermédiaire, par exemple, d'un "ou câblé" (9). Ainsi si l'un des deux convertisseurs de courant (8) DC/DC est défectueux, l'autre alimente les deux convertisseurs SE/DE (7). Chaque convertisseur (7) SE/DE du sous-système de disques peut être relié à l'extérieur par deux connecteurs (10). Le sous-système, selon l'invention est connecté au système hôte par des interfaces SCSI (17) DE. Une première carte (1b) adaptatrice est connectée à un interrupteur (11). Cet interrupteur peut être de type matériel par exemple, un interrupteur Dual In Line switch ou de type logiciel. Cet interrupteur (11) est relié à au moins un connecteur (3) de tiroirs (4) de disques (20), par exemple aux connecteurs D et E (3) des tiroirs (4(d), 4(e)) de disques (20) d'une première carte adaptatrice. Lorsqu'il est actif, l'interrupteur (11) modifie le système d'adressage des tiroirs (4(d), 4(e)) auxquels il est connecté, par exemple en ajoutant une valeur constante, par exemple +8 aux adresses des disques (20) des deux tiroirs (4(d), 4(e)) connectés. Les adresses des disques (20) des deux tiroirs (4(d), 4(e)) connectés à l'interrupteur (11) passent donc de la plage de valeurs 0 à 5 à la plage de valeurs 8 à 13.

Les figures 2A à 2F représentent un schéma synoptique simplifié d'exemples non limitatifs de configurations possibles du sous-système selon l'invention dans une variante compatible JBOD (Just a Bunch Of Disks). Par soucis de simplification, les cartes (12a, 12b) filles n'ont pas été représentées, et seules les liaisons physiques des cartes (1) adaptatrices avec les connecteurs (3) de tiroir (4) de disques (20) ont été représentées. Dans une configuration, représentée figure 2F, l'utilisateur peut connecter par exemple quatre systèmes hôtes (100 (a), 100 (b), 100 (c), 100 (d)) à chacun un SCSI de six disques (20).

La mise en place de deux connecteurs (10) par convertisseurs (7) SE/DE permet de réaliser un chaînage extérieur entre deux convertisseurs (7) SE/DE, de cartes (1a, 1b) adaptatrices différentes. Comme représenté sur les figures 2A et 2C, il est possible de relier ensemble deux SCSI de cartes (1a, 1b) différentes grâce à une liaison (18) située entre deux connecteurs (10) de convertisseur (7) SE/DE de deux cartes (1a, 1b) différentes. Dans cette configuration, il y a un conflit d'adresses puisque les disques (20) de deux tiroirs (4) connectés ont alors les mêmes adresses. L'interrupteur (11) permet dans cette configuration particulière, de modifier le système d'adresse des tiroirs (4), en ajoutant une valeur constante, par exemple +8 aux adresses des disques (20) d'un des tiroirs, et donc d'éviter ce conflit. Dans une configuration représentée figure 2A, un premier système hôte (100b) est connecté à un SCSI de douze disques et deux autres systèmes hôtes (100a, 100c) peuvent être reliés chacun à un SCSI de six disques. Les configurations possibles sont, à titre d'exemple non limitative :
- quatre SCSI de six disques avec pour adresses 0, 1, 2, 3, 4, 5, avec au moins un système hôte (100) par SCSI (fig. 2F), ou au moins deux systèmes hôtes de deux SCSI de six disques chacun, avec chaînage (fig.2C) ou sans chaînage (fig. 2B),
- deux SCSI de douze disques avec pour adresse 0, 1, 2, 3, 4, 5, 8, 9, 10, 11, 12, 13, chaque SCSI pouvant être relié à au moins un système hôte (fig. 2E), les modifications d'adresses étant obtenues grâce à l'interrupteur (11),
- 1 SCSI de douze disques avec pour adresse 0, 1, 2, 3, 4, 5, 8, 9, 10, 11, 12, 13, relié à un système hôte (100b fig. 2A) et deux SCSI de six disques avec pour adresse 0, 1, 2, 3, 4, 5, et 8, 9, 10, 11, 12, 13, reliés à au moins deux systèmes hôtes (100a, 100c fig. 2A), les modifications d'adresses étant obtenues grâce à l'interrupteur (11). Cette configuration nécessite le chaînage de deux convertisseurs SE/DE (7) de deux blocs différents grâce à la liaison (18 fig. 2A),
- 1 SCSI de douze disques avec pour adresse 0, 1, 2, 3, 4, 5, 8, 9, 10, 11, 12, 13, relié, par exemple, à quatre systèmes hôtes (fig. 2D).

Grâce à ces multiples configurations, l'utilisateur peut sécuriser ses données en utilisant, par exemple, des fonctions de duplication (mirroring), qui consistent à faire une copie d'un disque (200e, fig. 2B) sur un autre disque (201e, fig. 2B) d'un même tiroir (4e) ou pour obtenir plus de disponibilité, d'un autre tiroir. De plus, selon l'invention, les disques (200e, 200d fig. 2B) servant de miroir sont choisis, par exemple, sur des tiroirs (4e, 4d fig. 2B) différents. Selon la figure 2C, il est également possible avec le sous-système selon l'invention que deux systèmes hôtes (100a, 100b) partagent des données situées sur des disques (200e, 200a) de tiroirs (4e, 4a) différents, ces mêmes disques (200e, 200a) pouvant être, par exemple, eux-mêmes dupliqués (miror) sur des disques (201e, 201a) de tiroirs (4e ,4a) différents. Pour cette configuration, il suffit de connecter chaque système hôte à deux convertisseurs (7) SE/DE d'une même carte (1) adaptatrice de convertisseur (7) SE/DE, et réaliser un chaînage entre un convertisseur (7e) SE/DE du premier système hôte (100a) et un convertisseur SE/DE (7a) du deuxième système hôte( 100b) par l'intermédiaire de la liaison (18). Dans cet exemple, si un disque (200e) est défectueux, les données étant sauvegardées sur un autre disque (200a), il n'y a pas de perte d'informations; mais la défectuosité peut s'étendre à un tiroir tout entier puisque les données sont sauvegardées sur un tiroir différent, les données seront donc toujours accessibles. De plus, grâce au chaînage, lorsqu'un des systèmes hôtes (100a) est défectueux, le second (100b) peut continuer à utiliser les données partagées.

Une autre configuration possible, représentée figure 2D, consiste à connecter quatre systèmes hôtes à un SCSI de douze disques. Cette configuration est obtenue en chaînant deux convertisseurs SE/DE (7a, 7d) de 2 cartes (1) d'adaptatrices différentes et de connecter ensuite les quatre systèmes hôtes en utilisant des câbles Y (21).

L'utilisateur a ainsi à sa disposition un système de sécurisation de données hautement disponible, et configurable selon ses besoins.

Les possibilités de modification d'adresses des disques (20) et de double connexion en Y en sortie des convertisseurs SE/DE (7) permettent la flexibilité de configuration. Le doublement des alimentations, et des convertisseurs permettent d'avoir une grande disponibilité.

Ce sous-système de disque à multiples interfaces configurables est donc un système hautement disponible. Il possède une capacité de stockage important pouvant aller jusqu'à 24 disques et offre un grand choix de configurations, grâce à la possibilité de chaînage et à sa souplesse d'utilisation.

## Revendications

1. Sous-système de disques à multiples interfaces configurables **caractérisé en ce qu'**il comprend :
- au moins une carte (Ia, Ib) adaptatrice d'interface comprenant des convertisseurs d'interface à extrémité simple/extrémité différentielle SE/DE indépendants, dont une carte (Ia ou Ib) adaptatrice comprend un interrupteur pour modifier le système d'adressage des disques d'au moins un tiroir
- ledit au moins un tiroir (4), comprenant chacun une pluralité de disques (20), chaque tiroir (4) étant relié à une desdites cartes (Ia ou Ib) adaptatrices par des interfaces (2) de disque SCSI,
- et deux connecteurs (10) SCSI externes étant reliés à chaque dit convertisseur (7) d'interface à extrémité simple/extrémité différentielle SE/DE;
la ou les cartes (Ia, Ib) adaptatrices comprenant chacun :
▪ deux convertisseurs courant continu/continu DC/DC (8),
▪ une carte fille (12) pour connecter la carte adaptatrice audit au moins un tiroir (4),
▪ deux desdits convertisseurs (7) d'interface à extrémité simple/extrémité différentielle SE/DE indépendants, chaque convertisseur (7) SE/DE étant d'une part relié audit au moins un tiroir (4) via ladite carte (12) fille, et d'autre part alimenté indifféremment par l'un des deux convertisseurs courant continu/continu DC/DC (8) de la carte (1) adaptatrice.

2. Sous-système de disques à multiples interfaces configurables selon la revendication 1, **caractérisé en ce que** l'interrupteur (11) est un interrupteur matériel, de type interrupteur Dual in Line ou un interrupteur de type logiciel.

3. Sous-système de disques à multiples interfaces configurables selon la revendication 1 ou 2, **caractérisé en ce que** l'interrupteur (11) ajoute une valeur constante aux adresses des disques (20) tiroirs (4), cette valeur étant préférentiellement égale à 8.

4. Sous-système de disques à multiples interfaces configurables selon l'une des revendications 1 à 3, **caractérisé en ce que** les interfaces (2) SCSI qui relient les tiroirs (4) de disques (20) à la carte adaptatrice (1) sont de type extrémité simple (Single Ended) SE.

5. Sous-système de disques à multiples interfaces configurables selon l'une des revendications 1 à 4, **caractérisé en ce que** les interfaces (17) SCSI qui relient la carte (1) adaptatrice aux systèmes hôtes sont de type à extrémité différentielle DE (Differential Ended).

6. Sous-système de disques à multiples interfaces configurables selon l'une des revendications 1 à 5, **caractérisé en ce que** chaque convertisseur SE/DE (7) est relié par une connexion en V (17) à deux connecteurs (10) accessibles à l'extérieur du sous-système pour connecter, soit des terminateurs de ligne, soit des adaptateurs de bus d'une machine hôte.

7. Sous-système de disques à multiples interfaces configurables selon l'une des revendications 1 à 6, **caractérisé en ce que** chacun des convertisseurs de courant continu/continu DC/DC (8) des blocs de convertisseurs (7) SE/DE distribue une tension aux deux convertisseurs (7) SE/DE des blocs correspondant par l'intermédiaire d'un "ou câblé".

8. Sous-système de disques à multiples interfaces configurables selon l'une des revendications 1 à 7, **caractérisé en ce que** la carte (1) adaptatrice comprend une carte (12) fille, cette carte fille permettant, dans une première position, de connecter la carte adaptatrice à deux tiroirs déterminés de disques, et dans une deuxième position, de connecter la carte adaptatrice à deux tiroirs différents de disques de ceux de la première position.

9. Sous-système de disques à multiples interfaces configurables selon l'une des revendications 1 à 8, **caractérisé en ce qu'**une liaison (18) relie deux connecteurs (10) de deux convertisseurs SE/DE (7), réalisant ainsi un chaînage de deux tiroirs (4) de disques (20).

10. Sous-système de disques à multiples interfaces configurables selon l'une des revendications 1 à 8, **caractérisé en ce que** les interfaces de disques SCSI reliant les tiroirs (4) de disques et/ou les interfaces de disques SCSI reliant la ou les cartes (1) adaptatrices aux systèmes hôtes sont de type Ultra/Wide et supportent donc un débit maximum de 40 Mégaoctets/s.

11. Sous-système de disques à multiples interfaces configurables selon l'une des revendications 1 à 8, **caractérisé en ce que** la ou les cartes (Ia, Ib) adaptatrices d'interface comprennent des terminateurs de lignes (121) incorporés à chaque carte fille (12a, 12b) de chaque carte (Ia, Ib) adaptatrice associée.

## Patentansprüche

1. Subsystem von Disks mit mehreren konfigurierbaren Schnittstellen, **dadurch gekennzeichnet, dass** es umfasst:
- mindestens eine Schnittstellenadapterkarte (Ia, Ib), umfassend Schnittstellenkonverter mit unabhängigem einfachem/Differentialende SE/DE, wobei eine Adapterkarte (Ia oder Ib) einen Schalter umfasst, um das Adressiersystem der Disks mindestens eines Einschubs zu verändern,
- den mindestens einen Einschub (4), wobei jeder eine Vielzahl von Disks (20) umfasst, wobei jeder Einschub (4) mit einer der Adapterkarten (Ia oder Ib) durch SCSI-Diskschnittstellen (2) verbunden ist,
- und zwei externe SCSI-Verbinder (10), die mit jedem SE/DE-Konverter (7) verbunden sind;
wobei die Adapterkarte(n) (Ia, Ib) jeweils umfasst/umfassen:
▪ zwei DC/DC-Gleichstrom-Gleichstom-Konverter (8),
▪ eine Tochterkarte (12), um die Adapterkarte an den mindestens einen Einschub (4) anzuschließen,
▪ zwei der Schnittstellenkonverter (7) mit unabhängigem einfachem/Differentialende SE/DE, wobei jeder SE/DE-Konverter (7) zum einen mit einem Einschub (4) über die Tochterkarte (12) verbunden ist, und zum anderen unterschiedslos von einem der zwei DC/DC-Gleichstrom-Gleichstom-Konverter (8) von der Adapterkarte (1) versorgt wird.

2. Subsystem von Disks mit mehreren konfigurierbaren Schnittstellen nach Anspruch 1, **dadurch gekennzeichnet, dass** der Schalter (11) ein materieller Schalter vom Typ Dual in Line-Schalter oder ein Softwareschalter ist.

3. Subsystem von Disks mit mehreren konfigurierbaren Schnittstellen nach Anspruch 1 oder 2, **dadurch gekennzeichnet, dass** der Schalter (11) den Adressen der Disks (20) von zwei Einschüben (4) einen konstanten Wert hinzufügt, wobei dieser Wert vorzugsweise gleich 8 ist.

4. Subsystem von Disks mit mehreren konfigurierbaren Schnittstellen nach einem der Ansprüche 1 bis 3, **dadurch gekennzeichnet, dass** die SCSI-Schnittstellen (2), die die Einschübe (4) von Disks (20) mit der Adapterkarte (1) verbinden, vom Typ mit einfachem Ende (Single Ended) SE sind.

5. Subsystem von Disks mit mehreren konfigurierbaren Schnittstellen nach einem der Ansprüche 1 bis 4, **dadurch gekennzeichnet, dass** die SCSI-Schnittstellen (17), die die Adapterkarte (1) mit den Host-Systemen verbinden, vom Typ mit Differentialende DE (Differential Ended) sind.

6. Subsystem von Disks mit mehreren konfigurierbaren Schnittstellen nach einem der Ansprüche 1 bis 5, **dadurch gekennzeichnet, dass** jeder SE/DE-Konverter (7) durch eine V-Verbindung (17) mit zwei Verbindern (10) verbunden ist, die außerhalb des Subsystems zugänglich sind, um entweder Leitungsterminatoren oder Busadapter einer Hostmaschine anzuschließen.

7. Subsystem von Disks mit mehreren konfigurierbaren Schnittstellen nach einem der Ansprüche 1 bis 6, **dadurch gekennzeichnet, dass** jeder der DC/DC-Gleichstrom-Gleichstom-Konverter (8) der SE/DE-Konverterblöcke (7) mit Hilfe eines "Oder-Kabels" eine entsprechende Spannung an die zwei SE/DE-Konverter (7) der Blöcke verteilt.

8. Subsystem von Disks mit mehreren konfigurierbaren Schnittstellen nach einem der Ansprüche 1 bis 7, **dadurch gekennzeichnet, dass** die Adapterkarte (1) eine Tochterkarte (12) umfasst, wobei diese Tochterkarte erlaubt, in einer ersten Position die Adapterkarte an zwei bestimmte Einschübe von Disks anzuschließen, und in einer zweiten Position die Adapterkarte an zwei Einschüben von Disks anzuschließen, die sich von denen der ersten Position unterscheiden.

9. Subsystem von Disks mit mehreren konfigurierbaren Schnittstellen nach einem der Ansprüche 1 bis 8, **dadurch gekennzeichnet, dass** eine Verbindung (18) zwei Verbinder (10) von zwei SE-DE-Konvertern (7) verbindet, wodurch eine Verkettung von zwei Einschüben (4) von Disks (20) erfolgt.

10. Subsystem von Disks mit mehreren konfigurierbaren Schnittstellen nach einem der Ansprüche 1 bis 8, **dadurch gekennzeichnet, dass** die SCSI-Diskschnittstellen, welche die Einschübe (4) von Disks verbinden und/oder die SCSI-Diskschnittstellen, welche die Adapterkarte(n) (1) mit den Host-Systemen verbinden, vom Typ Ultra/Wide sind und damit einen maximalen Durchsatz von 40 Megabyte unterstützen.

11. Subsystem von Disks mit mehreren konfigurierbaren Schnittstellen nach einem der Ansprüche 1 bis 8, **dadurch gekennzeichnet, dass** die Schnittstellenadapterkarte(n) (Ia, Ib) Leitungsterminatoren (121) umfasst/umfassen, die in jede Tochterkarte (12a, 12b) jeder zugeordneten Adapterkarte (Ia, Ib) integriert sind.

## Claims

1. A disk storage subsystem with multiple configurable interfaces **characterized in that** it comprises:
- at least one interface adapter board (Ia, Ib) comprising independent single-ended/differential-ended SE/DE interface converters, an adapter board (Ia or Ib) of which comprises a switch for modifying the addressing system of the disks of at least one drawer,
- said at least one drawer (4), each comprising a plurality of disks (20), each drawer (4) being connected to one of said adapter boards (1a or 1b) by SCSI disk interfaces (2),
- and two external SCSI connectors (10) being connected to each SE/DE converter (7);
the adapter board(s) (Ia, Ib) each comprising:
▪ two direct current/direct current DC/DC converters (8),
▪ a daughterboard (12) for connecting the adapter board to said at least one drawer (4),
▪ two of said independent single-ended/differential-ended SE/DE interface converters (7), each SE/DE converter (7) being connected to a drawer (4) via said daughterboard (12) on the one hand, and fed by either of two direct current/direct current DC/DC converters (8) of the adapter board (1) on the other hand.

2. The disk storage subsystem with multiple configurable interfaces according to claim 1, **characterized in that** the switch (11) is a hardware switch of the dual in-line switch type or a switch of software type.

3. The disk storage subsystem with multiple configurable interfaces according to claim 1 or 2, **characterized in that** the switch (11) adds a constant value to the addresses of the disks (20) of two drawers (4), this value preferably being equal to 8.

4. The disk storage subsystem with multiple configurable interfaces according to one of claims 1 to 3, **characterized in that** the SCSI interfaces (2) connecting the drawers (4) of disks (20) to the adapter board (1) are of the single-ended SE type.

5. The disk storage subsystem with multiple configurable interfaces according to one of claims 1 to 4, **characterized in that** the SCSI interfaces (17) connecting the adapter board (1) to the host systems are of the differential-ended DE type.

6. The disk storage subsystem with multiple configurable interfaces according to one of claims 1 to 5, **characterized in that** each SE/DE converter (7) is connected by a V connection (17) to two connectors (10) accessible to the outside of the subsystem for connecting either line terminators or bus adapters of a host machine.

7. The disk storage subsystem with multiple configurable interfaces according to one of claims 1 to 6, **characterized in that** each of the direct current/direct current DC/DC converters (8) of the blocks of SE/DE converters (7) distributes a voltage to the two SE/DE converters (7) of the corresponding blocks by means of an "wired OR".

8. The disk storage subsystem with multiple configurable interfaces according to one of claims 1 to 7, **characterized in that** the adapter board (1) comprises a daughter board (12), this daughterboard making it possible, in a first position, to connect the adapter board to two given disk drawers, and in a second position, to connect the adapter board to two drawers of disks different from those of the first position.

9. The disk storage subsystem with multiple configurable interfaces according to one of claims 1 to 8, **characterized in that** a link (18) joins two connectors (10) of two SE/DE converters (7), thus producing a chaining of two drawers (4) of disks (20).

10. The disk storage subsystem with multiple configurable interfaces according to one of claims 1 to 8, **characterized in that** the SCSI disk interfaces connecting the drawers (4) of disks and/or the SCSI disk interfaces connecting the adapter board(s) (1) to the host systems are the Ultra/Wide type and hence support a maximum data rate of 40 megabytes/s.

11. The disk storage subsystem with multiple configurable interfaces according to one of claims 1 to 8, **characterized in that** the interface adapter board(s) (Ia, Ib) comprise line terminators (121) incorporated into each daughterboard (12a, 12b) of each associated adapter board (Ia, Ib).
